Europäisches Patentamt

European Patent Office

Office européen des brevets

(11) Numéro de publication : **0 032 070**
**B1**

# FASCICULE DE BREVET EUROPÉEN

(45) Date de publication du fascicule du brevet :
**13.07.83**

(21) Numéro de dépôt : **80401706.9**

(22) Date de dépôt : **28.11.80**

(51) Int. Cl.³ : **B 01 D 11/02**, G 21 C 19/44

(54) Appareil pour traiter des composés dans un liquide.

(30) Priorité : **18.12.79 FR 7930951**

(43) Date de publication de la demande :
**15.07.81 Bulletin 81/28**

(45) Mention de la délivrance du brevet :
**13.07.83 Bulletin 83/28**

(84) Etats contractants désignés :
**BE DE GB IT**

(56) Documents cités :
**CA A 885 832**

(73) Titulaire : **COMMISSARIAT A L'ENERGIE ATOMIQUE**
**Etablissement de Caractère Scientifique Technique**
**et Industriel**
**B.P. 510**
**F-75752 Paris Cedex 15 (FR)**

(72) Inventeur : **Sauvage, Henri**
**23, Allée du Romarin Les Cyprès**
**F-30200 Bagnols Sur Ceze (FR)**
Inventeur : **Tarnero, Maurice**
**6, Allée du Romarin Les Cyprès**
**F-30200 Bagnols Sur Ceze (FR)**

(74) Mandataire : **Mongrédien, André et al**
**c/o BREVATOME 25, rue de Ponthieu**
**F-75008 Paris (FR)**

Jouve, 18, rue St-Denis, 75001 Paris, France

Appareil pour traiter des composés dans un liquide

La présente invention concerne un appareil pour traiter en continu des composés dans un liquide, un tel appareil pouvant être utilisé notamment pour dissoudre en continu des combustibles nucléaires dans de l'acide nitrique lors du retraitement de ces combustibles.

On connaît déjà un certain nombre d'appareils permettant de dissoudre en continu des combustibles nucléaires, afin de les séparer de leurs gaines, généralement appelées « coques », après le tronçonnage des assemblages combustibles à retraiter.

Parmi ces appareils, certains sont constitués par des transporteurs-élévateurs à vibrations comprenant un arbre vertical portant une rampe hélicoïdale sur laquelle les « coques » sont transférées d'une position basse à une position haute sous l'effet des vibrations transmises à la rampe par l'arbre vertical. Ces vibrations correspondent à un mouvement de va-et-vient hélicoïdal permettant d'assurer le déplacement ascendant des « coques ».

En raison de la composante verticale du mouvement ainsi communiqué à la rampe hélicoïdale, ces appareils connus doivent être montés sur des blocs élastiques ou sur des ressorts, ce qui les rend à la fois complexes et fragiles. En outre, des contraintes mécaniques sont engendrées par la résistance du liquide à la composante verticale du mouvement de va-et-vient imprimé à la rampe et doivent être supportées par la rampe. Il en résulte une fatigue des soudures risquant d'entraîner des ruptures mécaniques.

D'autre part, il est connu du document CA-A-885 832 qu'un mouvement vertical descendant de matériaux sur une rampe hélicoïdale peut être obtenu par un mouvement de va-et-vient de cette rampe dans un plan horizontal.

La présente invention a pour objet un appareil pour traiter des composés dans un liquide ne présentant pas les inconvénients des appareils connus de type voisin et mettant en œuvre le principe du document CA-A-885 832.

Dans ce but et conformément à l'invention, il est proposé un appareil pour traiter des composés dans un liquide, cet appareil comprenant un élévateur hélicoïdal à secousses comportant une rampe hélicoïdale et des moyens pour imprimer à la rampe un mouvement de va-et-vient autour de son axe, caractérisé en ce que ce mouvement s'effectue dans un plan horizontal, et est tel que la vitesse de rotation de la rampe dans un sens soit supérieure à la vitesse de rotation de la rampe dans le sens opposé, l'appareil comprenant de plus une cuve cylindrique à axe vertical, sur laquelle est fixée ladite rampe, de forme annulaire, un couvercle fixe, au moins une tuyauterie d'arrivée du liquide prévue dans le couvercle, au moins un orifice latéral d'évacuation du liquide prévu dans la cuve, une goulotte d'entrée des composés portée par le couvercle et d'axe confondu avec celui de la cuve et une goulotte de sortie des composés disposée en haut de la rampe hélicoïdale et dans le prolongement de celle-ci, ladite tuyauterie d'arrivée du liquide débouchant sur une spire émergée de la rampe hélicoïdale, de façon à rincer en continu les composés restants avant leur évacuation par la goulotte de sortie.

Selon l'invention, les vibrations transmises à la rampe hélicoïdale sont donc constituées par un mouvement de va-et-vient ne présentant pas de composante verticale. Cette caractéristique permet d'éliminer les blocs élastiques ou les ressorts nécessaires à la sustentation dans les appareils connus, tout en réduisant sensiblement les risques de rupture mécanique. De plus les composés sont rincés automatiquement par le liquide arrivant dans la cuve, avant d'être évacués hors de celle-ci.

Conformément à une autre caractéristique de l'invention, la fréquence du mouvement de va-et-vient de la rampe est comprise entre 5 et 60 mn$^{-1}$. Cette fréquence relativement faible permet de réduire les contraintes mécaniques auxquelles sont soumises les parties mécaniques de l'appareil, ce qui diminue encore la fatigue des soudures.

De préférence, le fond de la cuve définit une partie inclinée vers l'entrée de la rampe hélicoïdale permettant aux matériaux ou aux objets introduits par la goulotte d'entrée de venir se placer à la base de la rampe hélicoïdale.

Conformément à une autre caractéristique de l'invention, lorsqu'un tel appareil est destiné au retraitement de combustibles nucléaires, le couvercle comporte un noyau annulaire, en matériau neutrophage, disposé entre la goulotte d'entrée et la rampe hélicoïdale.

On décrira maintenant, à titre d'exemple non limitatif, un mode de réalisation particulier de l'invention en se référant aux dessins annexés dans lesquels :

la figure 1 est une vue en coupe verticale représentant un appareil particulièrement adapté au retraitement des combustibles nucléaires, destiné à dissoudre ces combustibles dans de l'acide nitrique, et

la figure 2 est une vue de dessus, en coupe partielle, de l'appareil représenté sur la figure 1, illustrant notamment le vérin à double effet au moyen duquel un mouvement de va-et-vient autour de son axe est transmis à la rampe hélicoïdale de l'appareil.

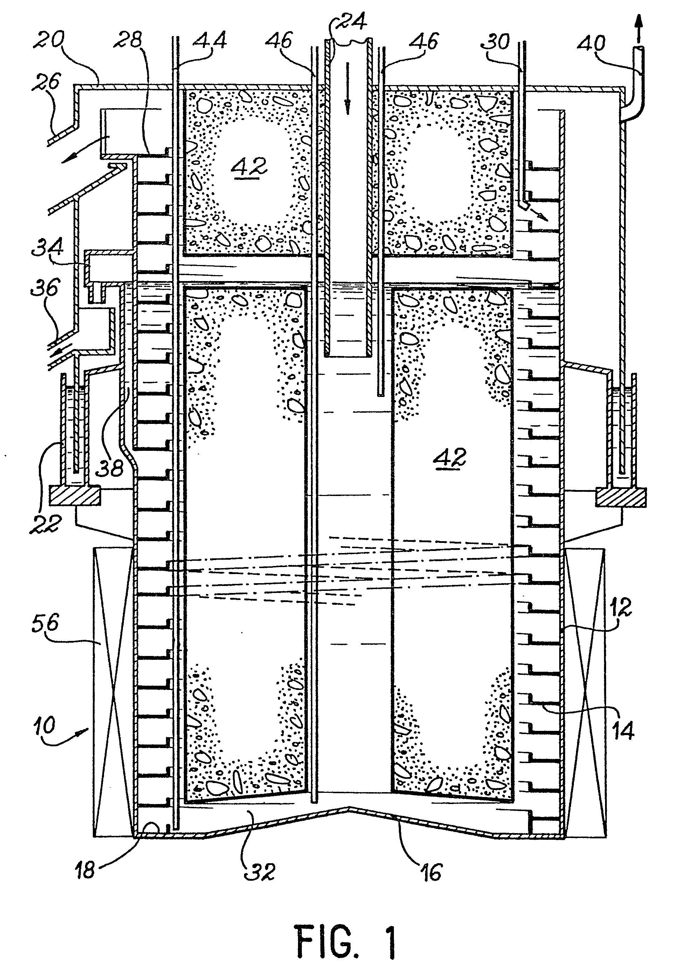

L'appareil pour dissoudre des composés tels que des combustibles nucléaires dans un liquide tel que l'acide nitrique représenté sur la figure 1 est constitué par un élévateur hélicoïdal à secousses désigné par la référence générale 10. L'élévateur 10 comprend une cuve cylindrique 12 dont la paroi porte une rampe hélicoïdale annulaire 14 et dont le fond 16 est conique de façon à définir une partie inclinée vers l'entrée de la rampe 14 que constitue son extrémité inférieure 18.

L'élévateur 10 comprend également un couvercle fixe 20 dont l'étanchéité avec la cuve 12 est assurée par une garde hydraulique 22. Le couvercle 20 porte en son centre une goulotte d'entrée 24 du matériau à dissoudre, d'axe confondu avec celui de la cuve 12. La sortie des composés restant à la fin de l'opération de dissolution s'effectue par une goulotte de sortie 26 formée dans le couvercle 20 en vis-à-vis de l'extrémité supérieure 28 de la rampe hélicoïdale 14.

Le couvercle 20 porte de plus une tuyauterie d'arrivée 30 du liquide de dissolution, constitué par de l'acide nitrique lorsque les composés admis par la goulotte 24 sont des combustibles nucléaires. De préférence, et afin d'effectuer le rinçage en continu de ces composés avant leur évacuation par la goulotte 26, l'extrémité libre de la tuyauterie d'arrivée 30 débouche sur une spire émergée de la rampe hélicoïdale 14 comme le montre la figure 1.

L'évacuation de la solution 32 formée par la réaction chimique de l'acide nitrique arrivant par la tuyauterie 30 sur les composés tels que des combustibles nucléaires irradiés arrivant par la goulotte 24 s'effectue par l'intermédiaire d'un système de trop-plein 34 formé dans la paroi de la cuve 12 et débouchant dans un orifice latéral d'évacuation 36 formé dans le couvercle 20. Dans une variante de réalisation (non représentée), le trop-plein 34 est relié à l'orifice d'évacuation par un conduit souple. De préférence, et en raison des mouvements imprimés à la cuve 12, le trop-plein 34 est séparé de la cuve par un tranquilliseur 38.

Une conduite 40 est également prévue dans le couvercle 20 pour permettre l'évacuation des gaz de dissolution formés dans la cuve 12.

Pour des raisons de sûreté-criticité, lorsque l'appareil représenté sur la figure 1 est destiné au retraitement des combustibles nucléaires, et notamment lorsque ces combustibles proviennent d'un réacteur nucléaire du type surrégénérateur, le couvercle 20 comporte un noyau annulaire 42, en matériau neutrophage tel que du béton boré gainé par de l'acier inoxydable, disposé entre la goulotte d'entrée 24 et la rampe hélicoïdale 14. Comme l'illustre la figure 1, le noyau 42 définit avec la rampe hélicoïdale 14 un espace annulaire et, dans le prolongement de la goulotte 24, un espace interne cylindrique. Ces espaces permettent notamment le passage de la tuyauterie d'arrivée 30 du liquide de dissolution, ainsi que le passage d'autres tuyauteries telles qu'une tuyauterie de vidange 44 et que diverses tuyauteries de contrôle 46 solidaires du couvercle 20 et disposées en couronne dans les espaces qui viennent d'être décrits. Les tuyauteries de contrôle 46 peuvent être constituées notamment par des cannes de bullage de mesure de niveau, de densité, de température, etc...

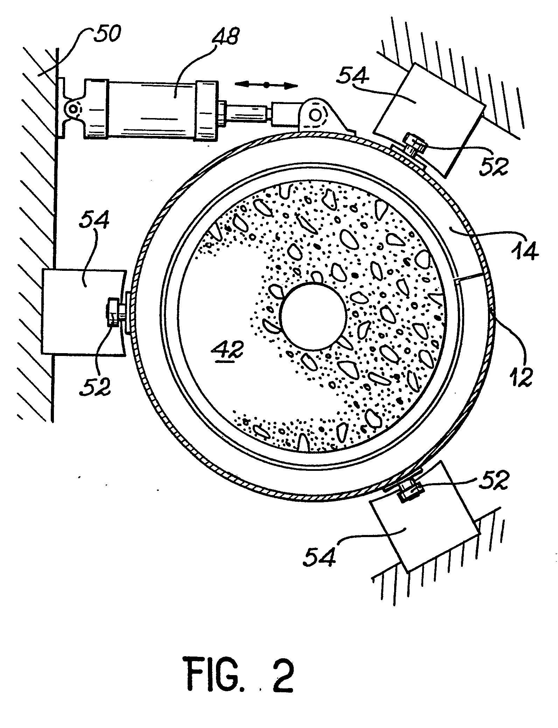

Comme l'illustre plus particulièrement la figure 2 et conformément à l'invention, des moyens sont prévus pour imprimer à la cuve 12, et par conséquent à la rampe 14, un mouvement de va-et-vient autour de leur axe commun et dans un plan horizontal, ce mouvement se décomposant en une avance rapide dans le sens de la montée des composés admis par la goulotte 24 sur la rampe 14 et en un recul lent dans le sens opposé ou en une avance lente dans le sens de la montée suivie d'un recul rapide dans le sens opposé, ces deux types de mouvements ayant pour effet de faire monter les composés situés sur la rampe lorsque les rapports des vitesses d'avance et de recul sont convenablement choisis. Dans le mode de réalisation représenté, ce mouvement de va-et-vient est communiqué à la cuve par un vérin à double effet 48 dont le corps est articulé sur un bâti fixe 50 et dont la tige est articulée sur la paroi de la cuve 12. Le vérin 48 commande ainsi l'avance et le recul du bol, la vitesse d'avance du bol étant rendue supérieure à la vitesse de recul du bol, ou inversement, par suite de la différence de pression de l'air comprimé entre les deux chambres du vérin et/ou en contrôlant la perte de charge au niveau des échappements d'air moteur.

Dans un autre mode de réalisation (non représenté), les moyens pour imprimer à la cuve 12 et à la rampe 14 un mouvement de va-et-vient peuvent comprendre deux vérins à simple effet agissant en deux points diamétralement opposés de la paroi de la cuve, l'un des vérins commandant le mouvement de la cuve dans le sens de la montée des composés le long de la rampe 14, tandis que l'autre vérin commande le mouvement de la cuve dans le sens opposé.

Le mouvement de va-et-vient de la cuve pourrait également être commandé par un mécanisme approprié tel qu'un système de came.

De préférence, les secousses imprimées à la cuve 12 et à la rampe hélicoïdale 14 par le vérin 48 dans le mode de réalisation représenté sont de faible fréquence, de façon à réduire autant que possible la fatigue des parties mécaniques de l'appareil et à éviter ainsi tout risque de rupture inopinée des soudures. Ainsi, la fréquence du mouvement de va-et-vient de la rampe 14 est en principe comprise entre 5 et 60 mn$^{-1}$.

Etant donné que le mouvement de vibration imprimé à la cuve 12 et à la rampe 14 est limité à un mouvement de va-et-vient dans un plan horizontal, la sustentation de la cuve 12 peut être réalisée de façon particulièrement simple et sans faire appel à des éléments souples tels que des blocs élastiques ou des ressorts. Ainsi, dans le mode de réalisation représenté sur les figures, cette sustentation est réalisée au moyen de trois galets 52 roulant sur des surfaces planes 54 disposées dans un même plan horizontal et formées sur des éléments solidaires du bâti 50.

Lorsque le liquide 32 contenu dans la cuve 12 est utilisé pour dissoudre des combustibles nucléaires, ce liquide est constitué par de l'acide nitrique qui doit être chauffé par des moyens de chauffage 56 disposés à l'extérieur de la cuve 12, entre la base de celle-ci et la garde hydraulique 22, dans le mode de réalisation représenté. Le chauffage de l'acide nitrique peut alors être réalisé, par exemple, par induction ou au moyen de panneaux radiants. Dans un autre mode de réalisation (non représenté), le chauffage de l'acide peut également être réalisé au moyen de double enveloppes disposées autour du noyau central.

Dans certains cas, et notamment lorsqu'il est nécessaire de vidanger la cuve 12, l'acide nitrique contenu dans celle-ci doit être refroidi. Ce refroidissement peut être obtenu par exemple en faisant circuler un liquide réfrigérant entre deux enveloppes disposées autour du noyau central.

L'appareil pour dissoudre des composés dans un liquide qui vient d'être décrit en se référant aux figures 1 et 2 fonctionne de la façon suivante.

Dans le cadre du retraitement des combustibles nucléaires, les aiguilles contenant les combustibles sont d'abord cisaillées afin de mettre à nu ces combustibles, puis les tronçons ainsi obtenus sont introduits dans un appareil de dissolution tel que celui qui vient d'être décrit, contenant un bain d'acide nitrique porté à ébullition. L'opération de dissolution effectuée dans cet appareil a pour but de séparer la solution contenant notamment les combustibles nucléaires tels que l'uranium et le plutonium, des déchets solides contenant notamment des tronçons de gaines appelés « coques ».

La cuve 12 étant remplie d'acide nitrique 32 par la tuyauterie d'arrivée 30 jusqu'à ce que le niveau de celui-ci affleure le trop-plein 34, l'acide est porté à ébullition à l'aide des moyens de chauffage 56. Les tronçons de gaine contenant le combustible nucléaire sont alors introduits, soit en continu, soit de façon discontinue, par la goulotte d'entrée 24 et tombent sur le fond conique 16 de la cuve 12, de façon à être amenés à l'extrémité inférieure 18 de la rampe hélicoïdale 14. La rampe 14 est alors soumise par le vérin 48 et par l'intermédiaire de la cuve 12, à un mouvement de va-et-vient autour de son axe et dans un plan horizontal, sous l'action du vérin à double effet 48, de telle sorte que la vitesse de rotation de la cuve dans le sens correspondant à la montée des tronçons le long de la rampe soit supérieure à la vitesse de rotation de la cuve dans le sens inverse, ou inversement. Il en résulte dans les deux cas que les tronçons de gaine montent lentement le long de la rampe 14. Au cours de ce déplacement, la réaction de dissolution du combustible nucléaire par l'acide nitrique porté à ébullition conduit à l'obtention d'une solution de ce combustible dans l'acide nitrique qui est évacuée par le trop-plein 34 et par l'orifice d'évacuation 36 comme l'indique la flèche représentée sur la figure 1. Simultanément, les vapeurs de dissolution produites sont évacuées par la conduite 40.

Lorsque les déchets solides émergent de la solution d'acide nitrique 32 par suite de leur montée le long de la rampe 14, les secousses qui continuent d'être imprimées aux « coques » contribuent à les débarrasser de leur rétention liquide, et elles sont ensuite rincées en continu par l'arrivée d'acide frais par la tuyauterie 30, avant d'être évacuées à l'extrémité supérieure 28 de la rampe 14 dans la goulotte 26.

Dans le cas de l'application particulière et non limitative de l'invention qui vient d'être décrite, on remarquera qu'en plus des avantages déjà mentionnés procurés par l'appareil décrit, celui-ci ne présente aucune perforation susceptible de provoquer un coincement des particules de faible dimension qui pourraient gêner l'évacuation des coques. De plus, cet appareil est particulièrement simple et robuste et permet de traiter des solides de forme et de taille très variées, puisqu'une rampe de largeur utile 90 mm peut recevoir sans difficulté des coques de 30 mm de longueur. En outre, la structure particulière de la cuve et la disposition des tuyauteries sur le couvercle permettent de démonter facilement la cuve, ce qui autorise une inspection et un remplacement aisés de celle-ci.

Bien entendu, et comme il a déjà été mentionné précédemment, l'invention n'est pas limitée au mode de réalisation et à l'application décrits, mais en couvre toutes les variantes.

**Revendications**

1. Appareil pour traiter des composés dans un liquide, comprenant un élévateur hélicoïdal à secousses comportant une rampe hélicoïdale (14) et des moyens (48) pour imprimer à la rampe un mouvement de va-et-vient autour de son axe, caractérisé en ce que ce mouvement s'effectue dans un plan horizontal, et est tel que la vitesse de rotation de la rampe dans un sens soit supérieure à la vitesse de rotation de la rampe dans le sens opposé, l'appareil comprenant de plus une cuve cylindrique (12) à axe vertical, sur laquelle est fixée ladite rampe, de forme annulaire, un couvercle fixe (20), au moins une tuyauterie (30) d'arrivée du liquide prévue dans le couvercle, au moins un orifice latéral (34) d'évacuation du liquide prévu dans la cuve, une goulotte (24) d'entrée des composés portée par le couvercle et d'axe confondu avec celui de la cuve et une goulotte (26) de sortie des composés disposée en haut de la rampe hélicoïdale et dans le prolongement de celle-ci, ladite tuyauterie d'arrivée (30) du liquide débouchant sur une spire émergée de la rampe hélicoïdale (14), de façon à rincer en continu les composés restants avant leur évacuation par la goulotte de sortie (26).

2. Appareil selon la revendication 1, caractérisé en ce que la fréquence du mouvement de va-et-vient de la rampe est comprise entre 5 et 60 mn⁻¹.

3. Appareil selon l'une quelconque des revendications précédentes, caractérisé en ce que le fond de la cuve (12) définit une partie inclinée (16) vers l'entrée de la rampe hélicoïdale (14).

4. Appareil selon l'une quelconque des revendications précédentes, caractérisé en ce que l'orifice latéral (34) d'évacuation du liquide est séparé de la cuve par un tranquiliseur (38).

5. Appareil selon l'une quelconque des revendications précédentes, caractérisé en ce que l'orifice latéral (34) d'évacuation du liquide débouche dans une goulotte (36) d'évacuation du liquide portée par le couvercle (20).

6. Appareil selon l'une quelconque des revendications précédentes, destiné au retraitement de combustibles nucléaires, caractérisé en ce que le couvercle (20) comporte un noyau annulaire (42), en matériau neutrophage, disposé entre la goulotte d'entrée (24) et la rampe hélicoïdale (14).

**Claims**

1. Apparatus for treating materials in a liquid, comprising a spiral vibratory elevator having a spiral ramp and means for subjecting the ramp to reciprocal movement around its axis, characterized in that said movement is effected in a horizontal plane, and is such that the speed of rotation of the ramp in one direction is greater than the speed of rotation of the ramp in the other direction, the apparatus comprising a cylindrical vessel (12), whose axis is vertical, and to which said ramp, having annular form is fixed, a fixed lid (20), at least one inlet conduit (30) for liquid provided in the lid, at least one lateral outlet (34) for liquid provided in the vessel, an inlet duct (24) for materials held by the lid, coaxially with the vessel, and an outlet duct (26) for materials prolonging the top of the spiral ramp, said liquid inlet conduit (30) opening on a turn of the spiral ramp (14) above liquid level, whereby continuously to rinse materials on the ramp before they leave through the outlet duct (26).

2. Apparatus according to Claim 1, characterized in that the frequency of reciprocation of the ramp is between 5 and 60 $mn^{-1}$.

3. Apparatus according to either of the preceding Claims, characterized in that the bottom of the vessel (12) has a portion (16) inclined towards the beginning of the spiral ramp (14).

4. Apparatus according to any one of the preceding Claims, characterized in that the lateral liquid outlet (34) is separated from the vessel by a damper (38).

5. Apparatus according to any one of the preceding Claims, characterized in that the lateral liquid outlet (34) opens into a liquid-outlet conduit (36) carried by the lid (20).

6. Apparatus according to any one of the preceding Claims, adapted for the reprocessing of nuclear fuels characterized in that the lid (20) comprises an annular core (42) of neutron-absorbing material between the inlet duct (24) and the spiral ramp (14).

**Ansprüche**

1. Vorrichtung zur Behandlung von Verbindungen in einer Flüssigkeit, mit einem spiralförmigen Schüttelelevator, welcher eine spiralförmige Steigbahn (14) und Mittel (48) aufweist, um der Steigbahn eine Hin- und Herbewegung um ihre Achse zu erteilen, dadurch gekennzeichnet, daß. diese Bewegung in einer waagrechten Ebene erfolgt und derart ist, daß die Drehgeschwindigkeit der Steigbahn in einer Richtung größer als die Drehgeschwindigkeit der Steigbahn in entgegengesetzter Richtung ist, daß die Vorrichtung ferner einen zylindrischen Behälter (12) mit senkrechter Achse aufweist, an dem die ringförmig ausgestaltete Steigbahn befestigt ist, sowie einen festen Deckel (20), wenigstens eine Rohrleitung (30) im Deckel für die Zufuhr von Flüssigkeiten, wenigstens eine Seitenöffnung (34) im Behälter zur Abfuhr von Flüssigkeiten, eine Einschüttöffnung (24), die vom Deckel getragen wird und deren Achse mit derjenigen des Behälters zusammenfällt zur Eingabe von Verbindungen und eine Austrittsöffnung (26) oberhalb der spiralförmigen Steigbahn und in ihrer Verlängerung zur Abgabe der Verbindungen, wobei die Rohrleitung (30) für die Flüssigkeiten in einer oberen Windung der spiralförmigen Steigbahn (14) mündet, so daß die in ihr enthaltenden Verbindungen kontinuierlich umspült werden, vor ihrem Austritt aus der Austrittsöffnung (26).

2. Vorrichtung nach Anspruch 1, dadurch gekennzeichnet, daß die Bewegungsfrequenz der Hin- und Herbewegung der Steigbahn zwischen 5 und 60 $min^{-1}$ liegt.

3. Vorrichtung nach einem der vorhergehenden Ansprüche, dadurch gekennzeichnet, daß der Boden des Behälters (12) einen zum Anfang der spiralförmigen Steigbahn (14) hin geneigten Teil (16) aufweist.

4. Vorrichtung nach einem der vorhergehenden Ansprüche, dadurch gekennzeichnet, daß die Seitenöffnung (34) zur Abfuhr von Flüssigkeit vom Behälter durch eine Beruhigungszone (38) getrennt ist.

5. Vorrichtung nach einem der vorhergehenden Ansprüche, dadurch gekennzeichnet, daß die Seitenöffnung (34) zur Abfuhr von Flüssigkeit in einer Auslaßöffnung (36) zur Abfuhr von Flüssigkeit mündet, die vom Deckel (20) getragen ist.

6. Vorrichtung nach einem der vorhergehenden Ansprüche und bestimmt zur Wiederaufbereitung von Kernbrennstoffen, dadurch gekennzeichnet, daß der Deckel (20) einen Ringkern (22) aus einem Neutronen absorbierenden Material aufweist, der zwischen der Einschüttöffnung (24) und der spiralförmigen Steigbahn (14) angeordnet ist.

FIG. 1

FIG. 2